# EUROPÄISCHE PATENTANMELDUNG

(11) **EP 1 243 560 A2**
(43) Veröffentlichungstag der Anmeldung: **25.09.2002**
(21) Anmeldenummer: 02006564.5
(22) Anmeldetag: 21.03.2002
(51) Int. Cl.: C02F 1/48

(54) **Vorrichtung zur magnetischen und/oder elektromagnetischen Behandlung von Flüssigkeiten und diese Vorrichtung verwendendes Verfahren**

(30) Priorität: 23.03.2001 DE 10114602
(71) Anmelder: Rational AG, 86899 Landsberg (DE)
(72) Erfinder: Schreiner, Thomas, Dr., 86857 Hurlach (DE)
(74) Vertreter: Weber-Bruls, Dorothée, Dr.

(57) **Zusammenfassung**

Die Erfindung betrifft eine Vorrichtung zur magnetischen und/oder elektromagnetischen Behandlung einer Flüssigkeit, wobei eine Einrichtung zum Erzeugen eines Magnetfeldes und/oder elektromagnetischen Feldes, wie in Form zumindest eines Magneten und/oder zumindest einer Spule, innerhalb eines die zu behandelnde Flüssigkeit fassenden sowie teilweise aufwärmenden Behältnisses, insbesondere innerhalb eines Dampferzeugers oder Warmwasserbereiters, im Bereich einer dem Behältnis, insbesondere durch Wärmekonvektion, aufsteigende Dampfblasen und/oder Druckausgleich, inhärenten Strömung angeordnet ist, sowie ein diese Vorrichtung verwendendes Verfahren.

## Beschreibung

Die Erfindung betrifft eine Vorrichtung zur magnetischen und/oder elektromagnetischen Behandlung einer Flüssigkeit und ein diese Vorrichtung verwendendes Verfahren.

Wird Wasser in einem Behältnis erwärmt, so wird das in dem Wasser gelöste Kohlendioxid (CO₂) ausgetrieben, was zu einer Überschreitung des Löslichkeitsprodukts von Calciumcarbonat (CaCO₃) führt. Das ausfallende Calciumcarbonat (Kalk) kristallisiert an Wänden, insbesondere von Heizkörpern oder anderen wichtigen Teilen des Behältnisses, was insbesondere bei einem das Behältnis umfassenden Dampferzeuger, Warmwasserbereiter oder dergleichen zu Fehlfunktionen sowie einer verkürzten Lebenszeit führt.

Zur Vermeidung der Kristallisation von Kalk an Wänden werden physikalische Wasserbehandlungssysteme im Stand der Technik eingesetzt. Diese Wasserbehandlungssysteme setzen das Wasser einem elektrischen und/oder magnetischen Feld aus, das die Bildung von Mikrokristallen im Wasser fördern soll, die als Kristallisationskeime für den beim Erwärmen anfallenden, weiteren Kalk dienen, so daß eine Kristallisation an Wänden unterdrückt wird.

Der Wirkmechanismus der bekannten Wasserbehandlungssysteme ist zwar im Detail noch nicht geklärt, jedoch wird angenommen, daß durch die angelegten elektrischen Felder entweder ein Abbau der Hydrathülle von Ca²⁺- und CO₃²⁻-Ionen oder eine Protonenübertragung von HCO₃⁻-Ionen auf Wasser unterstütz wird, so daß eine Kristallisation von Calciumcarbonat erleichtert wird.

Ein Verfahren zur kapazitiven Demineralisierung von Ionen enthaltenden Flüssigkeiten, wie Wasser, ist aus der DE 198 32 822 A1 bekannt, bei welchem nach dem Einleiten der Flüssigkeit in einen Behälter ein elektrisches Feld über Kondensatorplatten angelegt wird, was zu einem Hindurchleiten von Ionen der Flüssigkeit durch eine Filterwand führt. Die hindurchgeleiteten Ionen scheiden sich als Doppelschichten an den Kondensatorplatten ab. Durch das Einleiten von getakteten Spannungsspitzen in den Kondensatorplatten werden mikrokristalline Strukturen, die aus Ionenverbindungen resultieren, ausgefällt und danach aus der Vorrichtung entfernt.

Magnetische Felder erzielen vermutlich den gleichen Effekt wie elektrische Felder, jedoch durch die Lorentz-Kraft. Nachteil beim Einsatz von Magnetfeldern ist daher, daß zu behandelndes Wasser bewegt werden muß, um eine Wirkung zu erzielen. Vorteilhaft ist jedoch, daß Magnetfelder durch einen Permanentmagneten auf einfache Art und Weise erzeugt werden können.

Aus der US-RE-035689, der DE 196 32 357 sowie der DE 89 13 274 U1 sind beispielsweise Vorrichtungen zur magnetischen Behandlung von Flüssigkeiten bekannt, bei denen die Flüssigkeit durch eine Rohrleitung bewegt wird, die von Magneten umgeben ist. In der Rohrleitung kann dabei auch eine Fördereinrichtung für die Flüssigkeit angeordnet sein, wie in der DE 89 13 274 U1 offenbart.

In der WO 92/16460 ist ein Verfahren zur magnetischen Wasseraktivierung und eine Vorrichtung zur Reduzierung von Korrosion und Kalkablagerungen durch fließendes Wasser beschrieben, wobei bereits magnetisch behandeltes Wasser zur Durchströmung eines vor Korrosion und Kalkablagerungen zu schützenden Behältnisses eingesetzt wird. Zu diesem Zweck ist ein separater Wasserkreislauf mit einem Wasserbehandlungssystem insbesondere gemäß der DE 89 13 724 U1 vorgesehen.

In der DE 198 06 268 A1 ist ein Verfahren zur Behandlung von Inhaltsstoffen in Fluiden beschrieben, bei dem Spulen um fluidführende Leitungen oder Behältnisse angebracht sind, so daß elektromagnetische Felder in das Fluid induzierbar sind, mit einstellbaren Frequenzmustern.

Im Stand der Technik befinden sich die oben beschriebenen physikalischen Wasserbehandlungssysteme, beispielsweise bei einem Dampferzeuger oder Warmwasserbereiter, entweder im Wasserzulauf oder in einem separaten Wasserkreislauf. Dies führt einerseits zu kurzen Verweilzeiten des Wassers im Wasserbehandlungssystem und andererseits zu einem großen Platzbedarf bei Verwendung eines separaten Wasserkreislaufes.

Der Einbau einer Vorrichtung zur magnetischen und/oder elektromagnetischen Behandlung einer Flüssigkeit innerhalb eines rohrförmigen Zulaufes zu einem Behältnis hat zum einen den Nachteil, daß eine solche Vorrichtung nur wirksam sein kann, wenn die zulaufende Flüssigkeit bereits ausreichend kalkabscheidend ist, d. h. das Löslichkeitsprodukt für Calciumcarbonat bereits ausreichend überschritten ist, da ansonsten keine Kristallisation stattfinden kann. Zum anderen wird, wie oben beschrieben, die Wirkung des Magnetfeldes oder elektromagnetischen Feldes nicht optimal genutzt, da das Wasser dem Feld nur kurz, nämlich während des Zufließens, ausgesetzt ist. Ferner kann zwischen der Behandlung des Wassers im Wasserbehandlungssystem und dem Erhitzen im Behältnis eine längere Zeitspanne liegen, in der die Wirkung der Wasserbehandlung wieder nachläßt.

Der Einbau eines Wasserbehandlungssystems in einem separaten Wasserkreislauf vermeidet zwar diese Nachteile, erfordert dafür aber einen höheren Konstruktionsaufwand und Platzbedarf in Verbindung mit dem Behältnis, insbesondere aufgrund des Einsatzes einer Pumpe und zusätzlicher Wasserleitungen. Außerdem besteht zusätzlich die Gefahr, daß das Behältnis durch einen Defekt an der Pumpe oder eine Verstopfung der zusätzlichen Wasserleitung nicht nur ungeschützt von Korrosion und Kalkablagerungen ist, sondern selbst funktionsuntüchtig wird.

Der vorliegenden Erfindung liegt daher die Aufgabe zugrunde, die gattungsgemäße Vorrichtung dahingehend weiterzuentwickeln, daß die Nachteile des Stands der Technik überwunden werden, insbesondere eine einfache, unempfindliche und platzsparende Vorrichtung geliefert wird, mit der eine Flüssigkeit schnell und beliebig häufig magnetisch behandelt werden kann.

Diese Aufgabe wird dadurch gelöst, daß eine Einrichtung zum Erzeugen eines Magnetfeldes und/oder elektromagnetischen Feldes, wie in Form zumindest eines Magneten und/oder zumindest einer Spule, innerhalb eines die zu behandelnde Flüssigkeit fassenden sowie teilweise aufwärmenden Behältnisses, insbesondere innerhalb eines Dampferzeugers oder Warmwasserbereiters, im Bereich einer dem Behältnis, insbesondere durch Wärmekonvektion, aufsteigende Dampfblasen und/oder Druckausgleich, inhärenten Strömung angeordnet ist.

Dabei wird erfindungsgemäß vorgeschlagen, daß der Magnet in Form eines Permanentmagneten und/oder die Spule in Form einer Magnetspule ausgebildet ist bzw. sind.

Auch ist erfindungsgemäß vorgesehen, daß das Magnetfeld oder elektromagnetische Feld in dem Bereich bzw. in den Bereichen stärkster Strömung und/oder stärkster Aufwärmung der Flüssigkeit in dem Behältnis erzeugbar ist.

Vorteilhafterweise ist die Vorrichtung gekennzeichnet durch zumindest ein Mittel zur Erzeugung, Verstärkung und/oder Lenkung der Strömung in dem Behältnis, insbesondere in Form einer Konvektionshilfe und/oder Strömungsleiteinrichtung.

Eine weitere Ausführungsform der Erfindung ist gekennzeichnet durch einen den Magneten und/oder die Spule umgebenden Korrosionsschutz, vorzugsweise umfassend ein Kunststoffmaterial, wie Teflon.

Weiterhin wird erfindungsgemäß ein Verfahren zur magnetischen und/oder elektromagnetischen Behandlung einer Flüssigkeit in einer Vorrichtung nach der Erfindung vorgeschlagen, bei dem die Flüssigkeit länger als circa 5 Sekunden in dem Behältnis verweilt.

Dabei wird erfindungsgemäß vorgeschlagen, daß ein Magnetfeld erzeugt wird, dessen Magnetfeldstärke in Abhängigkeit von der zu behandelnden Flüssigkeit, insbesondere des CaCO₃-Gehaltes in der Flüssigkeit, gesteuert und/oder geregelt wird.

Ferner kann ein erfindungsgemäßes Verfahren dadurch gekennzeichnet sein, daß ein elektromagnetisches Feld erzeugt wird, dessen Amplitude, Frequenz und/oder Phase in Abhängigkeit von der zu behandelnden Flüssigkeit, insbesondere des CaCO₃-Gehaltes in der Flüssigkeit, gesteuert und/oder geregelt wird.

Dabei kann auch vorgesehen sein, daß Frequenzen genutzt werden, damit Carbonate eine calcitische kolloide Form annehmen.

Schließlich wird erfindungsgemäß auch vorgeschlagen, daß Frequenzen zur Vermeidung von Abschirmeffekten ausgewählt werden.

Der Erfindung liegt somit die überraschende Erkenntnis zugrunde, daß die Nachteile des Stands der Technik dadurch überwunden werden, daß beispielsweise ein ausreichend starker Permanentmagnet in die natürliche Strömung innerhalb eines Behältnisses, also in die einem Behältnis inhärente Strömung, eingebracht wird. So haben konventionelle Dampferzeuger in der Regel eine sehr starke inhärente Strömung, die durch aufsteigende Dampfblasen getrieben wird. Diese inhärente Strömung kann durch geeignete Konvektionshilfen noch verstärkt werden. In Warmwasserbereitern tritt in der Regel ebenfalls eine inhärente Strömung auf, die zum Abtransport zugeführter Wärme notwendig ist und entweder durch Konvektion, häufig unter Einsatz von Konvektionshilfen, oder durch äußeren Wasserdruck, getrieben wird. Durch die erfindungsgemäße Anordnung eines Permanentmagneten innerhalb des Behältnisses wird sichergestellt, daß zu Beginn einer Wasserbehandlung ausreichend Kohlendioxid ausgetrieben werden und eine Kristallisation einsetzen kann. Insbesondere ist eine beliebige Wiederholbarkeit der magnetischen Behandlung des Wassers in dem Behältnis möglich. Der Einbau eines Permanentmagneten innerhalb des Behältnisses spart zudem erheblichen Aufwand und Platz, insbesondere im Vergleich zu einem separaten Wasserbehandlungskreislauf. Weiterhin ist die Störanfälligkeit der erfindungsgemäßen Vorrichtung im Vergleich zu aus dem Stand der Technik bekannten Vorrichtungen deutlich geringer.

Von besonderer Bedeutung bei der erfindungsgemäßen Vorrichtung ist ferner, daß das Magnetfeld oder elektromagnetische Feld hauptsächlich die Bereiche innerhalb eines Dampferzeugers oder Warmwasserbereiters durchdringt, in denen die Strömung des zu erhitzenden Wassers besonders stark ist und bereits ein zumindest teilweises Aufwärmen des Wassers stattgefunden hat. Vorteilhaft ist ferner eine solche Anordnung des Magneten, daß der Bereich, in dem das Wasser erhitzt wird, vom Magnetfeld durchdrungen wird, da hier das Löslichkeitsprodukt für Calciumcarbonat beim Aufheizen zuerst überschritten wird. Die Wirksamkeit der erfindungsgemäßen Vorrichtung bzw. des erfindungsgemäßen Verfahrens ist unabhängig davon, ob das Löslichkeitsprodukt bereits im zulaufenden Wasser überschritten war, oder nicht.

Der Magnet der erfindungsgemäßen Vorrichtung kann mit einem Korrosionsschutz umhüllt sein.

In einer besonderen Ausführungsform der Erfindung kann die Magnetfeldstärke bzw. können u. a. bestimmte Frequenzmuster eines elektromagnetischen Feldes in Abhängigkeit von der zu behandelnden Flüssigkeit eingestellt werden. Bei einer ausreichenden Verweilzeit der Flüssigkeit in dem Behälter ist somit eine optimale magnetische Behandlung derselben möglich.

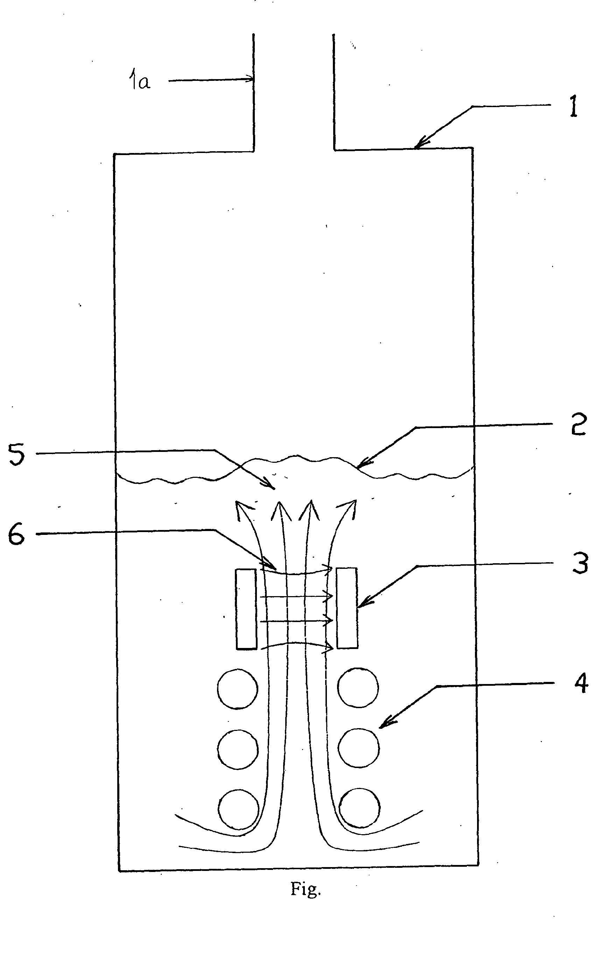

Weitere Merkmale und Vorteile der vorliegenden Erfindung ergeben sich aus der folgenden Beschreibung, in der ein Ausführungsbeispiel der Erfindung anhand einer aus einer einzigen Figur bestehenden schematischen Zeichnung im einzelnen erläutert ist. Dabei zeigt die Figur eine Ausführungsform der erfindungsgemäßen Vorrichtung in einem Dampferzeuger im Querschnitt.

Die Figur zeigt einen Dampferzeuger mit einem Dampferzeugergehäuse 1 sowie einem Dampfaustritt 1a, wobei das Dampferzeugergehäuse 1 in etwa zur Hälfte mit Wasser gefüllt ist. Unterhalb der Wasseroberfläche 2 sind Permanentmagneten 3 angeordnet, unter denen Heizkörper 4 vorgesehen sind.

Bei Betrieb des Dampferzeugers wird das Wasser innerhalb des Dampferzeugergehäuses 1 durch die Heizkörper 4 erwärmt. Wie durch das Bezugszeichen 5 gekennzeichnet, strömt das erwärmte Wasser 2 durch aufsteigende Dampfblasen und/oder Wärmekonvektion in Pfeilrichtung an die Wasseroberfläche 2. Im Bereich zwischen den Heizkörpern 4 ist die Strömung des Wassers am stärksten. Steigt das erwärmte Wasser nach oben zur Wasseroberfläche 2, so strömt es zwischen den beiden Permanentmagneten 3 hindurch, die ein Magnetfeld erzeugen, das durch Magnetfeldlinien 6 gekennzeichnet ist. Durch den angedeuteten Strömungsverlauf des Wassers wird erreicht, daß das gesamte Wasser innerhalb des Dampferzeugergehäuses 1 optimal magnetisch behandelt werden kann. Die Verweilzeit des Wassers 2 in dem Dampferzeuger 1 ist beliebig einstellbar, so daß eine Kristallisation von Calciumcarbonat aus dem Wasser gewährleistet ist. Somit wird verhindert, daß sich ausfallender Kalk an Wänden der Heizkörper 4 oder anderen Teilen des Dampferzeugers 1 abscheidet und die Funktion des Dampferzeugers beeinträchtigt.

Die in der vorstehenden Beschreibung, in der Zeichnung sowie in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Dampferzeugergehäuse
- 1a: Dampfausgang
- 2: Wasseroberfläche
- 3: Permanentmagnet
- 4: Heizkörper
- 5: Wasserströmung
- 6: Magnetfeldlinien

## Patentansprüche

1. Vorrichtung zur magnetischen und/oder elektromagnetischen Behandlung einer Flüssigkeit (2), **dadurch gekennzeichnet, daß**
eine Einrichtung zum Erzeugen eines Magnetfeldes (6) und/oder elektromagnetischen Feldes, wie in Form zumindest eines Magneten (3) und/oder zumindest einer Spule, innerhalb eines die zu behandelnde Flüssigkeit (2) fassenden sowie teilweise aufwärmenden Behältnisses (1), insbesondere innerhalb eines Dampferzeugers oder Warmwasserbereiters, im Bereich einer dem Behältnis (2), insbesondere durch Wärmekonvektion, aufsteigende Dampfblasen und/oder Druckausgleich, inhärenten Strömung (5) angeordnet ist.

2. Vorrichtung nach Anspruch 1, **dadurch gekennzeichnet, daß**
der Magnet in Form eines Permanentmagneten (3) und/oder die Spule in Form einer Magnetspule ausgebildet ist bzw. sind.

3. Vorrichtung nach Anspruch 1 oder 2, **dadurch gekennzeichnet, daß**
das Magnetfeld (6) oder elektromagnetische Feld in dem Bereich bzw. in den Bereichen stärkster Strömung (5) und/oder stärkster Aufwärmung der Flüssigkeit (2) in dem Behältnis (1) erzeugbar ist.

4. Vorrichtung nach einem der vorangehenden Ansprüche, **gekennzeichnet durch**
zumindest ein Mittel zur Erzeugung, Verstärkung und/oder Lenkung der Strömung (5) in dem Behältnis (1), insbesondere in Form einer Konvektionshilfe und/oder Strömungsleiteinrichtung.

5. Vorrichtung nach einem der vorangehenden Ansprüche, **gekennzeichnet durch**
einen den Magneten (3) und/oder die Spule umgebenden Korrosionsschutz, vorzugsweise umfassend ein Kunststoffmaterial, wie Teflon.

6. Verfahren zur magnetischen und/oder elektromagnetischen Behandlung einer Flüssigkeit in einer Vorrichtung nach einem der vorangehenden Ansprüche, **dadurch gekennzeichnet, daß**
die Flüssigkeit länger als circa 5 Sekunden in dem Behältnis verweilt.

7. Verfahren nach Anspruch 6, **dadurch gekennzeichnet, daß**
ein Magnetfeld erzeugt wird, dessen Magnetfeldstärke in Abhängigkeit von der zu behandelnden Flüssigkeit, insbesondere des CaCO₃-Gehaltes in der Flüssigkeit, gesteuert und/oder geregelt wird.

8. Verfahren nach Anspruch 6, **dadurch gekennzeichnet, daß**
ein elektromagnetisches Feld erzeugt wird, dessen Amplitude, Frequenz und/oder Phase in Abhängigkeit von der zu behandelnden Flüssigkeit, insbesondere des CaCO₃-Gehaltes in der Flüssigkeit, gesteuert und/oder geregelt wird.

9. Verfahren nach Anspruch 8, **dadurch gekennzeichnet, daß**
Frequenzen genutzt werden, damit Carbonate eine calcitische kolloide Form annehmen.

10. Verfahren nach Anspruch 8, **dadurch gekennzeichnet, daß**
Frequenzen zur Vermeidung von Abschirmeffekten ausgewählt werden.
